# EUROPEAN PATENT APPLICATION

(11) **EP 4 585 809 A1**
(43) Date of publication of application: **16.07.2025**
(21) Application number: 23862837.4
(22) Date of filing: 01.08.2023
(51) Int. Cl.: F15B 15/10, B25J 15/10, B25J 15/12

(54) **ROBOT HAND**

(30) Priority: 09.09.2022 JP 2022144196
(71) Applicant: BRIDGESTONE CORPORATION, Chuo-ku Tokyo 104-8340 (JP)
(72) Inventor: FUJITA, Shungo, Tokyo 104-8340 (JP); MINOSHIMA, Haruki, Tokyo 104-8340 (JP); OONO, Shingo, Tokyo 104-8340 (JP); YOSHIIZUMI, Satoshi, Tokyo 113-0001 (JP); MABUCHI, Ken, Tokyo 113-0001 (JP); MIYAZAKI, Takeshi, Tokyo 113-0001 (JP)
(74) Representative: Marks & Clerk LLP
(86) International application number: PCT/JP2023/028188
(87) International publication number: WO 2024/053294

(57) **Abstract**

A robot hand includes: a cylindrical base actuator that is contracted in a cylinder-axial direction and is curved on one side of a cylinder circumference depending on an increase in internal pressure in a cylinder; a frame member that is disposed along the base actuator in the cylinder-axial direction, supports the base actuator, has an expansion/contraction portion which is expanded and contracted conforming to curved deformation of the base actuator; and plural cylindrical finger actuators that are attached to the frame member at intervals in an extension direction of the base actuator to have one end fixed to the frame member and the other end being a free end so that the finger actuators extend in a direction intersecting the cylinder-axial direction, and that are each contracted and curved in a cylinder-axial direction on one side of a cylinder circumference depending on an increase in internal pressure in a cylinder.

## Description

### Technical Field

The present disclosure relates to a robot hand.

### Background Art

Conventionally, as fluid pressure actuators, McKibben actuators including a rubber tube and a sleeve (interwoven with high-tension fibers) covering an outer surface of the rubber tube are known.

In such McKibben fluid pressure actuators, lengths of the rubber tube and the sleeve in an axial direction can change. A technology is proposed in which a side of a fluid pressure actuator, on which no restraint member is provided, is contracted and is curved and deformed by providing a restraint member from one end side to the other end side of a rubber tube in an axial direction in a part thereof in a circumferential direction (see Japanese Patent Application Laid-Open (JP-A) No. 2021-88999).

### SUMMARY OF INVENTION

Use of a plurality of such fluid pressure actuators makes it possible to grip an object while adjusting a curved degree. There is a demand for a technique for coping with gripping and moving of various objects by relatively moving a plurality of fluid pressure actuators.

In view of this fact, an object of the disclosure is to easily change a positional relationship between a plurality of finger actuators to improve performance.

In order to achieve the object, a robot hand of a first aspect includes: a cylindrical base actuator that is contracted in a cylinder-axial direction and is curved on one side of a cylinder wall depending on an increase in internal pressure in a cylinder; a frame member that is disposed along the base actuator in the cylinder-axial direction, that supports the base actuator, has an expansion/contraction portion which is expanded and contracted conforming to curved deformation of the base actuator, and that is curved and deformed conforming to the curved deformation of the base actuator; and a plurality of cylindrical finger actuators that are attached to the frame member at intervals in an extension direction of the base actuator to have one end fixed to the frame member and the another end being a free end so that the finger actuators extend in a direction intersecting the cylinder axis, and that are each contracted and curved in the cylinder-axial direction on one side of a cylinder circumference depending on an increase in internal pressure in a cylinder.

The robot hand of the first aspect includes the base actuator, the frame member, and the finger actuators. The base actuator and the finger actuators have a cylindrical shape and are contracted in the cylinder-axial direction and are curved on one side of the cylinder circumference depending on an increase in internal pressure in the cylinder. The frame member is disposed along the base actuator in the cylinder-axial direction, supports the base actuator, has the expansion/contraction portion which is expanded and contracted conforming to curved deformation of the base actuator, and is curved and deformed conforming to the curved deformation of the base actuator. The plurality of cylindrical finger actuators are attached to the frame member at intervals in the extension direction of the base actuator to have one end fixed to the frame member and the other end being a free end so that the finger actuators extend in a direction intersecting the cylinder axis of the base actuator.

The base actuator is supported by the frame member and is curved depending on an increase in internal pressure. The frame member conforms to the curved deformation of the base actuator due to expansion or contraction of the expansion/contraction portion. Consequently, it is possible to change a positional relationship between ends of the plurality of finger actuators on one side. Hence, it is possible to change a positional relationship between the plurality of finger actuators to improve performance such as gripping or moving depending on a location, a shape, or the like of an object.

In a robot hand of a second aspect according to the robot hand of the first aspect, the frame member includes support joint members provided at respective attachment positions of the plurality of finger actuators, and the expansion/contraction portion connects adjacent support joint members to each other.

In the robot hand of the second aspect, since the finger actuators are disposed at the support joint members and the support joint members are connected to each other by the expansion/contraction portion, a support position and a position of the expansion/contraction portion can be shifted in the cylinder-axial direction, and the base actuator can be operated in a well-balanced manner.

In a robot hand of a third aspect according to the robot hand of the first or second aspect, the expansion/contraction portion is formed of a leaf spring that is curved conforming to the curved deformation of the base actuator.

In the robot hand of the third aspect, the expansion/contraction portion can be simply formed of the leaf spring.

In a robot hand of a fourth aspect according to the robot hand of any one of the first to third aspects, the base actuator has one end fixed to the frame member and another end being a free end.

In the robot hand of the fourth aspect, since the other end is the free end, relative movement of the base actuator in the cylinder-axial direction with respect to the frame member is allowed during the curved deformation of the base actuator, and the base actuator can be smoothly curved and deformed.

In a robot hand of a fifth aspect according to the robot hand of any one of the first to fourth aspects, the frame member is integrally molded.

According to the robot hand of the fifth aspect, the frame member can be integrally and simply formed.

According to the disclosure, the positional relationship between the plurality of finger actuators can be easily changed to improve the performance.

### BRIEF DESCRIPTION OF DRAWINGS

Fig. 1 is a perspective view of a robot hand according to a first embodiment shown from a curve inner side.
Fig. 2 is a perspective view of the robot hand according to the first embodiment shown from the curve inner side.
Fig. 3 is a partially exploded perspective view of a base actuator.
Fig. 4 is a cross-sectional view of the base actuator.
Fig. 5 is a plan view of a finger actuator.
Fig. 6 is a top view showing an operation state of the robot hand according to the first embodiment.
Fig. 7 is a perspective view of a support joint member which is a part of a frame member shown from the curve inner side.
Fig. 8 is a perspective view of the support joint member which is a part of the frame member shown from a curve outer side.
Fig. 9 is a perspective view of the robot hand (after being operated) according to the first embodiment shown from the curve inner side.
Fig. 10 is a perspective view of a robot hand (before being operated) according to a second embodiment shown from the curve inner side.
Fig. 11 is a top view of the robot hand (before being operated) according to the second embodiment.
Fig. 12 is a perspective view of the robot hand (after being operated) according to the second embodiment shown from the curve inner side.
Fig. 13 is a top view of the robot hand (after being operated) according to the second embodiment.

### DESCRIPTION OF EMBODIMENTS

Hereinafter, embodiments for realizing the technology of the disclosure will be described in detail with reference to the drawings.

Configurational elements and processes having the same effect and function are denoted by the same reference numerals throughout the drawings, and redundant description thereof may be omitted, if appropriate. The disclosure is not limited to the following embodiments at all, and can be implemented with appropriate modifications within the scope of the object of the disclosure.

### <First Embodiment>

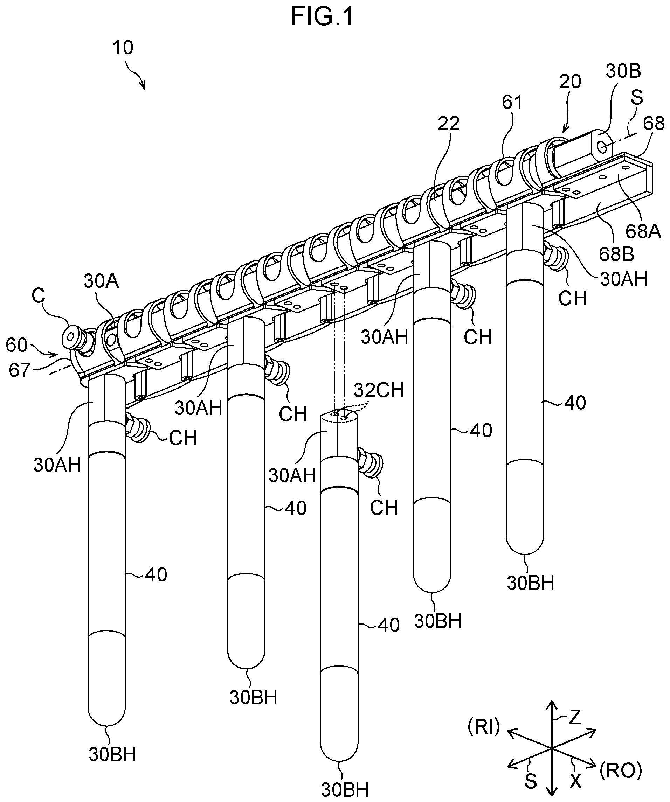

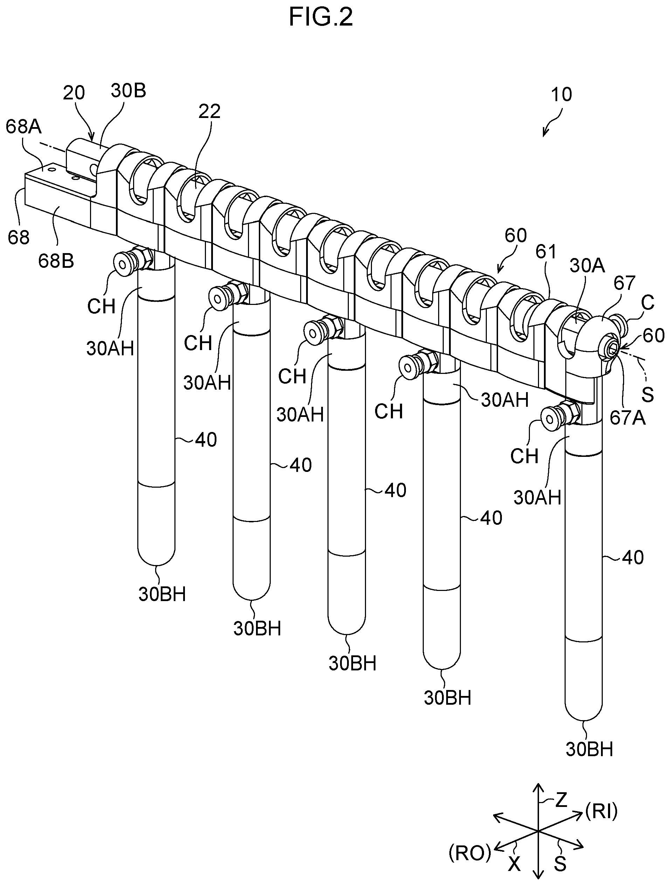

Figs. 1 and 2 are perspective views of a robot hand 10 according to a first embodiment of the disclosure. One end side (the left side in Fig. 1) of the robot hand 10 is attached to a distal end of a robot arm (not shown). The robot hand 10 according to the disclosure includes a base actuator 20, a frame member 60 that supports the base actuator 20, and a plurality of finger actuators 40 (five finger actuators in the embodiment). The frame member 60 is curved due to an operation of the base actuator 20. The finger actuators 40 are further curved inward in a bending direction of the curved frame member 60, and can apply a force to a symmetrical object (not shown) to grip, push, or move the object.

### <Base Actuator 20>

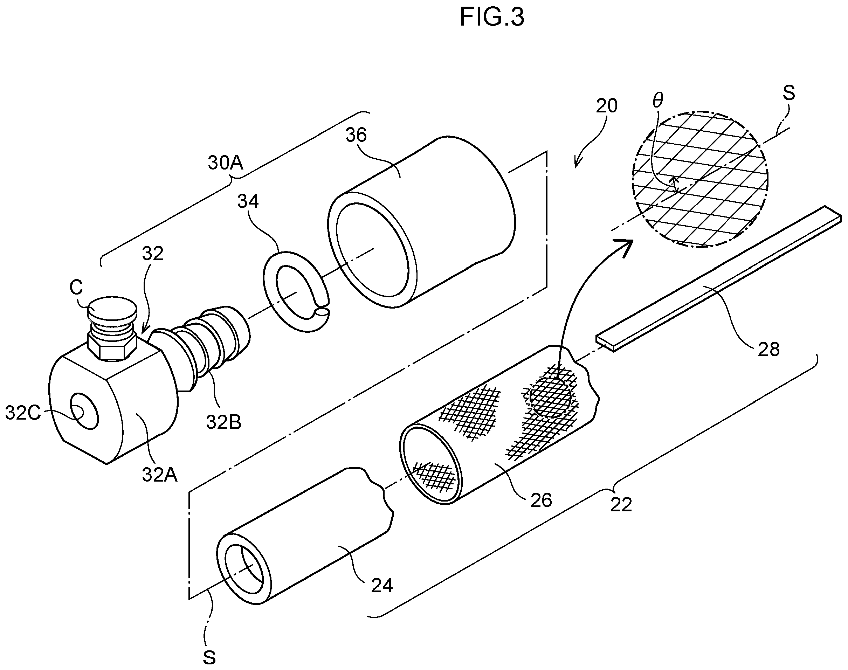

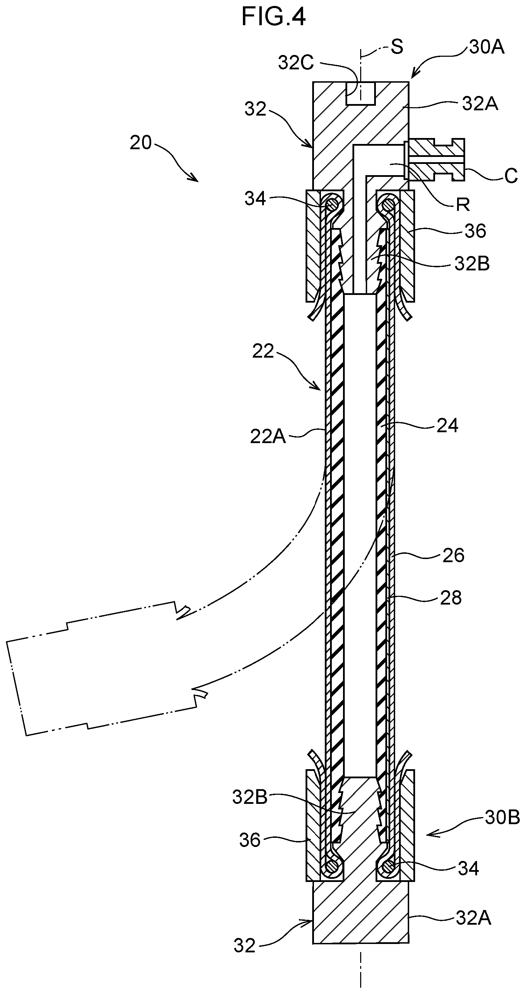

As shown in Fig. 3, the base actuator 20 includes an actuator main body 22 and sealing members 30A and 30B (see Fig. 4). The base actuator 20 has a cylindrical shape as a whole.

As also shown in Fig. 4, the actuator main body 22 includes a tube 24, a sleeve 26, and a restraint member 28. The tube 24 has a cylindrical shape which is expandable depending on elastic deformation, and is expanded and contracted depending on a pressure change of an internal fluid. An axial direction of the tube 24 in a case in which compressed air is not supplied to the tube 24 and the tube 24 has a linear shape is referred to as an "axial direction S". As will be described below, an axis of the tube 24 in a case in which the base actuator 20 is curved is referred to as a "curved axis SR". The tube 24 can be made of an elastic material such as butyl rubber. Air can be used as a fluid that is supplied to the tube 24, and in this case, the base actuator 20 is a pneumatic actuator. In a case in which the base actuator 20 is hydraulically driven, it is preferable to use at least one selected from the group consisting of nitrile rubber (NBR) having high oil resistance, hydrogenated NBR, chloroprene rubber, and epichlorohydrin rubber.

The sleeve 26 has a cylindrical shape that covers the outer circumference of the tube 24. The sleeve 26 is an expandable structure obtained by interweaving fiber cords oriented in a predetermined direction, and the oriented cords intersect each other at a predetermined angle θ with respect to the axial direction S. The sleeve 26 has such a shape, thereby being deformed as in a pantograph in which the angle θ changes, and conforming to contraction and expansion of the tube 24 while restricting the contraction and the expansion.

As the cord constituting the sleeve 26, an aromatic polyamide (aramid fiber) cord or a polyethylene terephthalate (PET) fiber cord is preferably used. However, the fiber cords are not limited to such types of fiber cords, and cords made of other high-strength fibers such as polyparaphenylene benzobisoxazole (PBO) fibers may be used.

The restraint member 28 is provided between the tube 24 and the sleeve 26. The restraint member 28 has an elongated plate shape, is disposed having a longitudinal direction in a direction parallel to the axial direction S of the tube 24, covers a part of the outer circumference of the tube 24, and is disposed from one end to the other end of the tube 24.

The restraint member 28 is formed of a material that is not expanded/contracted by pressurization, and is bendable and deformable in a direction in which the end portions thereof approach each other. As the restraint member 28, a so-called leaf spring can be used. A dimension of the leaf spring is determined depending on a size of the base actuator 20, a required gripping force, and the like. The material of the leaf spring is not particularly limited, and typically, any material that is easily bent and deformed and resistant to compression, such as metal such as stainless steel, may be used. Alternatively, the leaf spring may be formed of a carbon fiber reinforced plastic (CFRP) thin plate or the like.

The sealing member 30A includes a sealing connector 32, a locking ring 34, and a caulking member 36.

The sealing connector 32 includes a lid portion 32A and an insertion portion 32B which are integrally molded. The lid portion 32A has a diameter larger than an outer diameter of the tube 24, and the insertion portion 32B is formed to extend in the axial direction S from the center on one end side of the lid portion 32A. A fixing hole 32C for fixing the sealing member to the frame member 60 to be described below is formed on a side opposite to the insertion portion 32B of the lid portion 32A. The insertion portion 32B has a so-called bamboo shoot shape, and is inserted into one end side of the tube 24 inside the sleeve 26. The sealing member 30A can be made of preferably metal such as stainless steel, and the material thereof is not limited to such metal, and a hard plastic material or the like may be used.

As shown in Fig. 4, the sealing connector 32 has a flow channel R. The flow channel R is formed to extend in the axial direction S at a radial center portion of the insertion portion 32B and communicates with a coupling portion C on a side surface of the lid portion 32A. An air supply hose (not shown) is coupled to the coupling portion C, and compressed air is supplied to the connection portion C.

The locking ring 34 has a ring shape, is disposed on the outer side of the sleeve 26 so that the sleeve 26 is interposed between the insertion portion 32B and the locking ring 34, and locks the sleeve 26 to the sealing connector 32. The sleeve 26 is folded back to the outer circumference thereof via the locking ring 34. The locking ring 34 can be made of a material such as metal, hard plastic, fiber, or rubber.

The caulking member 36 is disposed to cover a portion of the outer circumference of the actuator main body 22 into which the insertion portion 32B is inserted, and is caulked with the actuator main body 22 on the sealing connector 32. Consequently, the actuator main body 22 is fixed to the sealing connector 32. The caulking member 36 can be made of metal such as an aluminum alloy, brass, and iron.

The sealing member 30B includes a sealing connector 32, a locking ring 34, and a caulking member 36 which are similar to those of the sealing member 30A. However, the fixing hole 32C, the coupling portion C, and the flow channel R are not formed in the sealing connector 32.

### <Operations of Base Actuator>

The base actuator 20 is used in a manner in which the sealing member 30A on one end side is fixed to a fixing portion 67 to be described below, and the sealing member 30B on the other end side functions as a free end.

When compressed air flows in from the coupling portion C via the air supply hose, a pressure in the base actuator 20 increases. Due to the increase in internal pressure, the tube 24 is elastically deformed and expanded, the sleeve 26 is deformed as in a pantograph such that the angle θ increases, and a force is applied in a direction in which the length of the actuator main body 22 contracts. In this case, since the contraction of a wall of the actuator main body 22 on an outer circumferential side on which the restraint member 28 is disposed is restricted, an outer circumferential wall (hereinafter referred to as a "curve inner wall 22A") of the actuator main body 22 on the side, on which the restraint member 28 is not disposed, is contracted when viewed in the axial direction S. Consequently, the restraint member 28 is bent and deformed, and the entire actuator main body 22 is curved as represented by a dash-double-dot line in Fig. 4. In the base actuator 20, the curve inner wall 22A, which is one side of a cylinder side wall, is contracted in the axial direction S and is curved depending on an increase in internal pressure in the cylinder.

When the pressure of the air supplied from the air supply hose is weakened, the air flows out from the inside of the base actuator 20, and the internal pressure is decreased. A curved degree of the curve inner wall 22A is decreased depending on a decrease in the internal pressure, and the internal pressure returns to the atmospheric pressure, thereby causing the entire actuator main body 22 to return to a straight line shape.

### <Finger Actuator>

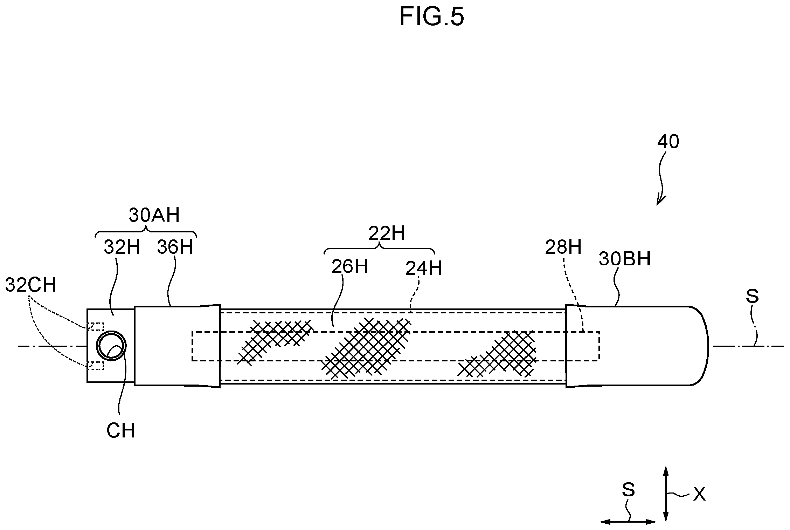

As shown in Fig. 5, the five finger actuators 40 have the same configuration as the base actuator 20, and include an actuator main body 22H and sealing members 30AH and 30BH. The actuator main body 22H corresponding to the actuator main body 22 includes a tube 24H, a sleeve 26H, and a restraint member 28H. Hereinafter, all configurational members are denoted by reference numerals of the respective configurations of the base actuator 20 with a suffix of H.

The sealing connector 32H has a pair of fixing holes 32CH for fixing the finger actuator 40 to the frame member 60 to be described below. The fixing holes 32CH are formed of a pair of holes. The sealing member 30BH has an R-shaped distal end.

### <Frame Member>

As shown in Figs. 1 and 2, the frame member 60 includes a plurality of support joint members 61 (ten support joint members in the embodiment), and the support joint members 61 are configured to be connected in the axial direction S and arranged along the base actuator 20. Since the base actuator 20 and the frame member 60 have the substantially same cylinder-axial direction, the axial direction of the frame member 60 is also referred to as the axial direction S. The fixing portion 67 is provided on one end side of the frame member 60 in the axial direction S, and a distal-end support rack 68 is provided on the other end side thereof. The frame member 60 is integrally formed of a resin material. The resin material is not particularly limited, and polyamide resin can be preferably used. Other examples of the resin material can include ABS, polyurethane, polyester, and polyethylene. The frame member may be formed of a material other than the resin or a metal material, and can be formed of an alloy of aluminum and magnesium in consideration of the lightness and strength. In both cases of the resin material and the metal material, it is preferable that the resin material and the metal material can be integrally molded by a 3D printer or the like.

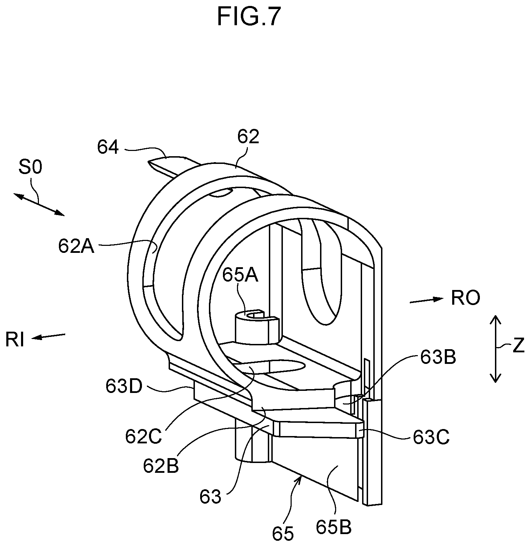

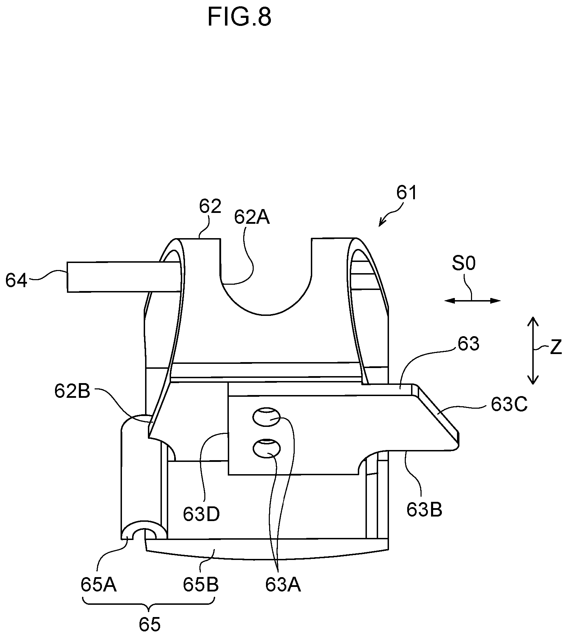

As shown in Figs. 7 and 8, each of the support joint members 61 is integrally formed, and includes an annular portion 62, a support 63, a guide portion 64, and a hinge member 65.

The annular portion 62 has a shape of a cylinder, and the base actuator 20 can be inserted into the cylinder. Hereinafter, a curve inner side of the base actuator 20 inserted into the frame member 60 will be referred to as a "curve inner side RI", and a curve outer side thereof will be referred to as a "curve outer side RO". A side of the support joint member 61 to which the finger actuator 30 is attached is referred to as a "lower side", and the opposite side is referred to as an "upper side". A cylinder-axial direction of each of the support joint members 61 is referred to as an "axial direction S0". The axial direction S0 substantially coincides with the axial direction S when the base actuator 20 has a non-curved shape (linear shape). Directions along the curve inner side RI and the curve outer side RO are represented by an arrow X in the drawing.

A middle opening 62A is formed in a middle portion of the annular portion 62 in the axial direction S0. The middle opening 62A opens upward. Both outer ends of the annular portion 62 in the axial direction S0 are obliquely cut out when viewed from the upper side so that a length of the annular portion in the axial direction S0 decreases from the hinge member 65 to be described below toward the curve inner side. A bottom portion 62B having a flat undersurface is formed on a side (lower side) opposite to the middle opening 62A of the annular portion 62, and an attachment hole 62C is formed in the bottom portion 62B.

The hinge member 65 is integrally provided on the curve outer side RO of the annular portion 62. The hinge member 65 includes an expansion/contraction portion 65A and a connection portion 65B. The connection portion 65B extends downward to be flush with and continuous from a wall of the annular portion 62 on the curve outer side RO, has a flat surface on the curve inner side RI, and has a round (R) surface on the curve outer side RO which has a thickness increasing toward a center of the surface in the cylinder-axial direction.

The expansion/contraction portion 65A is formed of a leaf spring having a semicylindrical shape having an axial direction (hereinafter referred to as an "axial direction Z") in a direction orthogonal to the axial direction S0, and can be expanded due to elastic deformation in a direction in which one end and the other end thereof in a circumferential direction are separated. In other words, the expansion/contraction portion 65Ais elastically deformable such that the curvature of an arc viewed in the axial direction Z is decreased (such that a curved degree is reduced). The expansion/contraction portion 65A is fixed to end portions of the adjacent connection portions 65B, and connects the connection portions 65B of the adjacent support joint members 61. Consequently, the hinge member 65 is relatively movable about the expansion/contraction portion 65A such that an angle between the adjacent connection portions 65B which is formed on the curve inner side RI side changes.

The support 63 is provided on the lower side of the bottom portion 62B of the annular portion 62. The support 63 has a plate shape, and a pair of attachment holes 63A is formed at positions corresponding to the attachment hole 62C. When viewed from the lower side, one end side of the support 63 in the cylinder-axial direction is obliquely cut out to be longer on the curve outer side RO in the axial direction S0, and extends in the axial direction S0 to overlap the connection portions 65B of the adjacent support joint members 61. The overlapping portion is in contact with the bottom portions 62B of the annular portions 42 of the adjacent support joint members 61, and supports the bottom portion 62B from the lower side. One end side of the support 63 in the axial direction S0 is disposed to be separated from the connection portion 65B by a length of projection of the expansion/contraction portion 65A from the connection portion 65B toward the curve inner side RI, and an engagement portion 63B is formed on the curve outer side RO of the one end side of the support 63 in the cylinder-axial direction. The engagement portion 63B has a recessed shape formed by cutting out, on the curve outer side RO, the support 63 on the one end side in the axial direction S0, and the expansion/contraction portion 65A engages with the engagement portion. Hereinafter, the one end side of the support 63 in the axial direction S0 is referred to as a "support projection end 63C", and the other end side is referred to as a "support other end 63D".

The guide portion 64 is provided inside an upper portion of the annular portion 62. The guide portion 64 has a pin shape, and is disposed having a longitudinal direction parallel to the axial direction S. The guide portion 64 extends to overlap, in the axial direction S0, the annular portion 62 of a support joint member 61 adjacent on one side, is in contact with an inner side of an upper wall of the adjacent support joint member 61, and moves while being in contact with the inner side of the upper wall even when the support joint members 61 relatively move. That is, in the adjacent support joint members 61, the support joint member 61 on the one side is supported from the lower side by the guide portion 64 of the support joint member 61 on the other side.

The plurality of support joint members 61 are continuously arranged in the axial direction S and are connected to each other by the expansion/contraction portions 65A to include the frame member 60. As shown in Figs. 1 and 2, the fixing portion 67 is provided on one end side of the frame member 60. The fixing portion 67 is disposed to close an opening of the support joint member 61 on one end side in the cylinder-axial direction. In the fixing portion 67, a fixing pin 67A is inserted into the fixing hole 32C of the base actuator 20, and a proximal end side of the base actuator 20 is fixed to the frame member 60.

The distal-end support rack 68 is provided on the other end side of the frame member 60. The distal-end support rack 68 includes a seating portion 68A extending from the bottom portion 62B of the support joint member 61 disposed at the other end, and a seating connection portion 68B connected to the expansion/contraction portion 65A of the support joint member 61.

The base actuator 20 is inserted into the annular portion 62 of the frame member 60, and has a proximal end side (the sealing member 30A side) fixed to the fixing portion 67 on the one end side. A distal end side (the sealing member 30B side) of the base actuator 20 is seated on the seating portion 68A of the distal-end support rack 68. One end side of the base actuator 20 is a free end, and the base actuator 20 is movable in the axial direction S in the frame member 60.

The finger actuator 40 has a proximal end side (the sealing member 30AH side) attached to the support 63 of the frame member 60. The pair of fixing holes 32CH are formed in the sealing member 30AH of the finger actuator 40, and are fixed using respective fixing screws (not shown) via the attachment hole 62C of the bottom portion 62B and the pair of attachment holes 63A formed in the support 63. A distal end of the finger actuator 40 (on the sealing member 30BH side) is a free end. The restraint member 28H of the finger actuator 40 is disposed on the curve outer side RO.

An air supply hose (not shown) is coupled to a coupling portion CH of each of the five finger actuators 40. When compressed air flows in from the coupling portion CH via the air supply hose, a pressure in the finger actuator 40 increases. Then, the finger actuator 40 is curved and deformed depending on an increase in internal pressure such that the curve inner side RI becomes the inner side thereof.

Next, operations of the robot hand 10 of the embodiment will be described.

When the robot hand 10 grips an object OB, the robot hand 10 is moved to the vicinity of the object OB, and compressed air is supplied to the base actuator 20 via the air supply hose. Consequently, the base actuator 20 is curved and deformed depending on an increase in internal pressure such that the curve inner side RI becomes the inner side thereof.

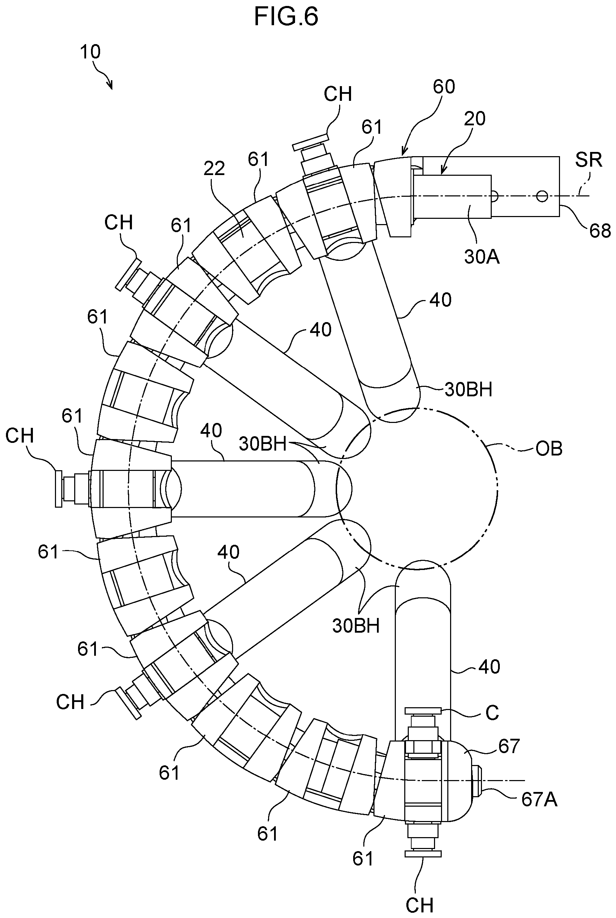

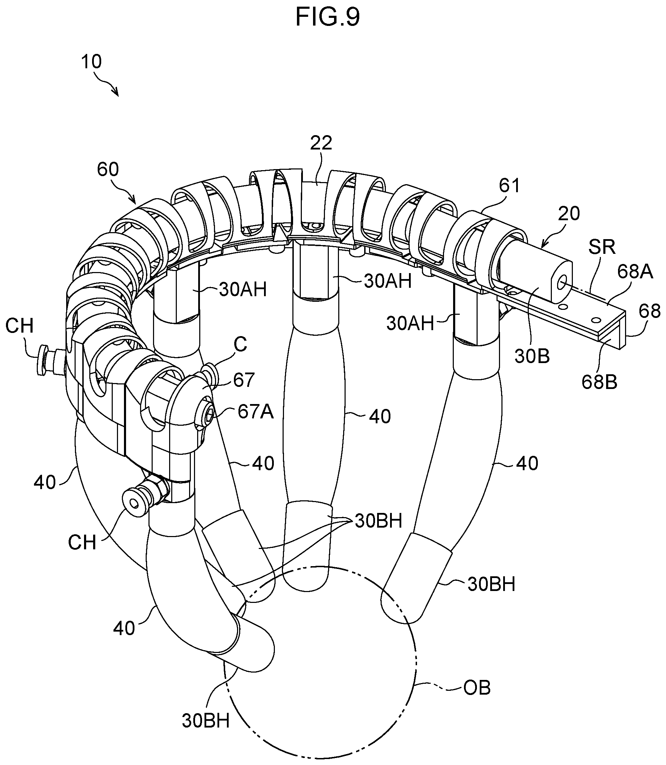

Due to the curved deformation, a force is applied to the curve inner side RI of each of the annular portions 62 of the frame member 60, and as shown in Figs. 6 and 9, the hinge member 65 is deformed around the expansion/contraction portion 65A so that the angle between the adjacent connection portions 65B becomes small. In this case, the expansion/contraction portion 65A is expanded in a direction in which one end and the other end thereof in the circumferential direction are separated depending on elastic deformation. Angles between the support projection ends 63C and the support other ends 63D of the adjacent supports 63 are decreased, and upper surfaces of the support projection ends 63C relatively move while supporting the bottom portions 62B of the adjacent supports 63. The guide portions 64 relatively move while being in contact with the inner sides of the upper walls of the adjacent support joint members 61. In this manner, the frame member 60 is curved and deformed conforming to the curved deformation of the base actuator 20.

Due to the curved deformation of the frame member 60, relative positions of proximal end portions of the five finger actuators 40 are changed from a state of being aligned on a straight line (the axial direction S) to a state of being aligned on a curved line (the curved axis SR). In this state, compressed air is supplied to the finger actuators 40 via the air supply hose. Consequently, the gripping actuator 40 is curved and deformed depending on the internal pressure such that the curve inner side RI becomes the inner side thereof.

The pressure of the compressed air supplied via the air supply hose is adjusted, and as shown in Fig. 9, the object OB is pinched between distal end portions of the plurality of finger actuators 40, and the object 12 can be gripped with a force generated due to the curving.

According to the robot hand 10 of the embodiment, the relative positions of the one ends of the plurality of finger actuators 40 can be easily moved using the base actuator 20. Consequently, the performance can be improved according to a position, a shape, and the like of the object.

In the embodiment, since the finger actuators 40 are disposed at the support joint members 61 and the support joint members 61 are connected to each other by the expansion/contraction portions 65A, a support position and a position of the expansion/contraction portion 65A can be shifted in the axial direction S, and the base actuator 20 can be operated in a well-balanced manner.

In the embodiment, since the expansion/contraction portion 65A is formed of the leaf spring, the expansion/contraction portion 655A can be simply configured. Use of the resin material enables the expansion/contraction portion 65A to be easily manufactured as a part of the support joint member 61. Since a restoring force of the leaf spring causes a force to be applied to the base actuator 20 in a direction in which the base actuator 20 is unbent, the base actuator 20 can smoothly return to the original linear state after an operation such as gripping is finished and the compressed air is caused to flow out.

In the embodiment, since the distal end of the base actuator 20 is the free end, relative movement of the base actuator in the axial direction S with respect to the frame member 60 is allowed during the curved deformation of the base actuator 20, and the base actuator 20 can be smoothly curved and deformed.

In the embodiment, the individual support joint members 61 in the frame member 60 include the respective support projection ends 63C of the supports 63 and the respective guide portions 64, and relatively move while supporting the adjacent support joint members 61 when the frame member 60 is curved and deformed. Hence, it is possible to reduce torsion (a state in which the distal end and the proximal end are separated from the same plane to the opposite side) when the frame member 60 is curved and deformed.

In the embodiment, an example in which one object OB is gripped by the robot hand 10 has been described as an example, but the robot hand 10 can also be preferably used for raking or moving a plurality of objects OB.

### <Second Embodiment>

Next, a robot hand 70 of the second embodiment will be described. In the embodiment, the same portions as those of the first embodiment are denoted by the same reference numerals, and the detailed description thereof will be omitted.

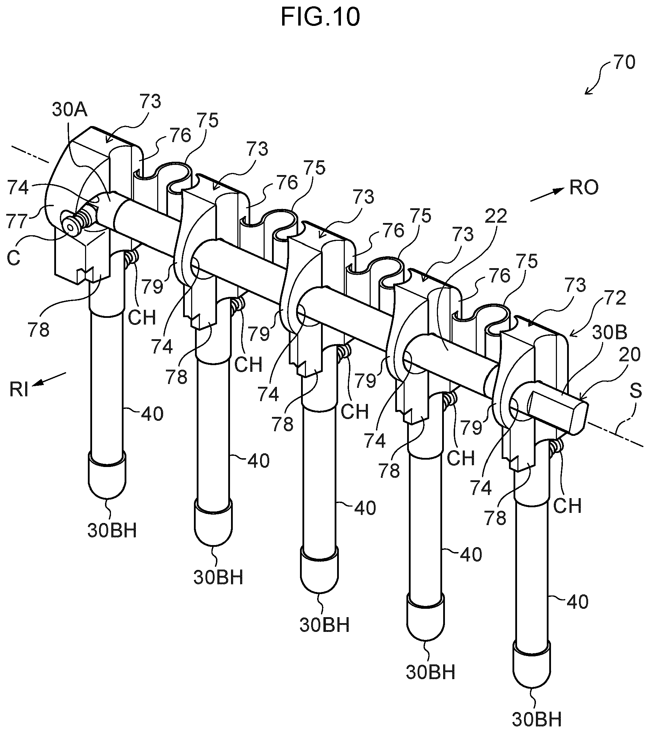

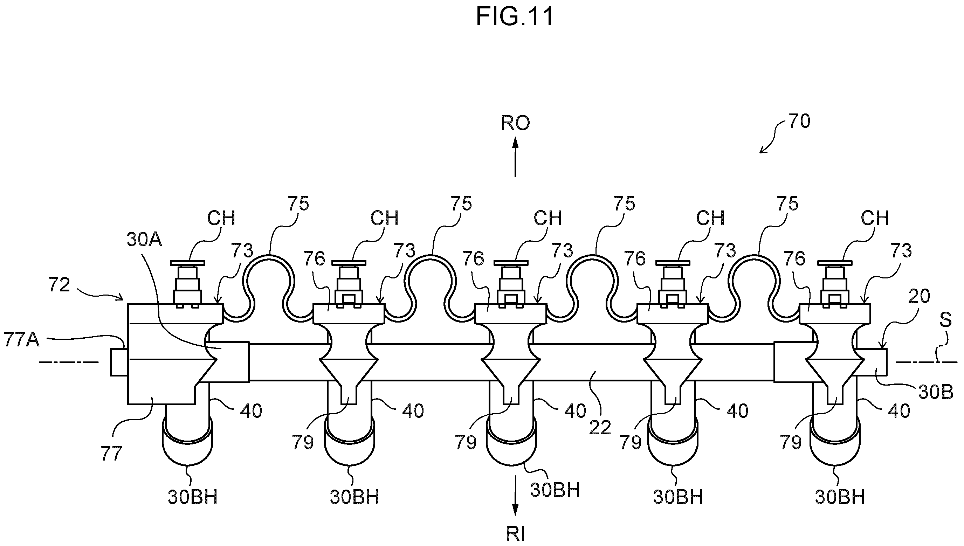

As shown in Figs. 10 and 11, the robot hand 70 of the embodiment includes a base actuator 20, five finger actuators 40, and a frame member 72. Regarding the base actuator 20 and the five finger actuators 40, the same ones as those in the first embodiment can be used.

The frame member 72 includes a plurality of support joint members 73 (five support joint members in the embodiment), the support joint members 73 are connected in the axial direction S by leaf-spring expansion/contraction members 75, and the frame member 72 is disposed along the base actuator 20. A fixing portion 77 is provided on one end side of the frame member 72 in the axial direction S. The frame member 72, including the leaf-spring expansion/contraction members 75, is integrally formed of a resin material. The resin material is not particularly limited, and polyamide resin can be preferably used. Other examples of the resin material can include ABS, polyurethane, polyester, and polyethylene. The frame member may be formed of a material other than the resin or a metal material, and can be formed of an alloy of aluminum and magnesium in consideration of the lightness and strength. In both cases of the resin material and the metal material, it is preferable that the resin material and the metal material can be integrally molded by a 3D printer or the like.

An insertion hole 74 into which the base actuator 20 is inserted is formed in the support joint member 73. A connection portion 76 is formed on the curve outer side RO of the support joint member 73, a thin portion 79 is formed on the curve inner side RI thereof, and an attachment portion 78 is formed below the insertion hole 74.

The connection portion 76 is provided on the curve outer side RO of the insertion hole 74, and both ends in the axial direction S are connected to the leaf-spring expansion/contraction members 75. The thin portion 79 has a shorter length in the axial direction S than the connection portion 76, and is tapered from the curve outer side RO side toward the curve inner side RI. The leaf-spring expansion/contraction member 75 has an arc shape in which a plate surface projects toward the curve outer side RO in an initial state, and is elastically deformable such that both ends of an arc are separated.

The finger actuator 40 has a proximal end side (the sealing member 30AH side) attached to the attachment portion 78 of the frame member 72. A distal end of the finger actuator 40 (on the sealing member 30BH side) is a free end. The restraint member 28H of the finger actuator 40 is disposed on the curve outer side RO.

A proximal end side (the sealing member 30A side) of the base actuator 20 is inserted into the insertion hole 74, and is fixed to the fixing portion 77 by a jig 77A. A distal end side (the sealing member 30B side) of the base actuator 20 is inserted into the insertion hole 74 of the support joint member 73 disposed on the most distal end side and becomes a free end. The base actuator 20 is movable in the axial direction S in the frame member 72.

Next, operations of the robot hand 70 of the embodiment will be described.

When the robot hand 70 grips a grip target object, the robot hand 70 is moved to the vicinity of the grip target object, and compressed air is supplied to the base actuator 20 via an air supply hose. Consequently, the base actuator 20 is curved and deformed depending on an increase in internal pressure such that the curve inner side RI becomes the inner side thereof.

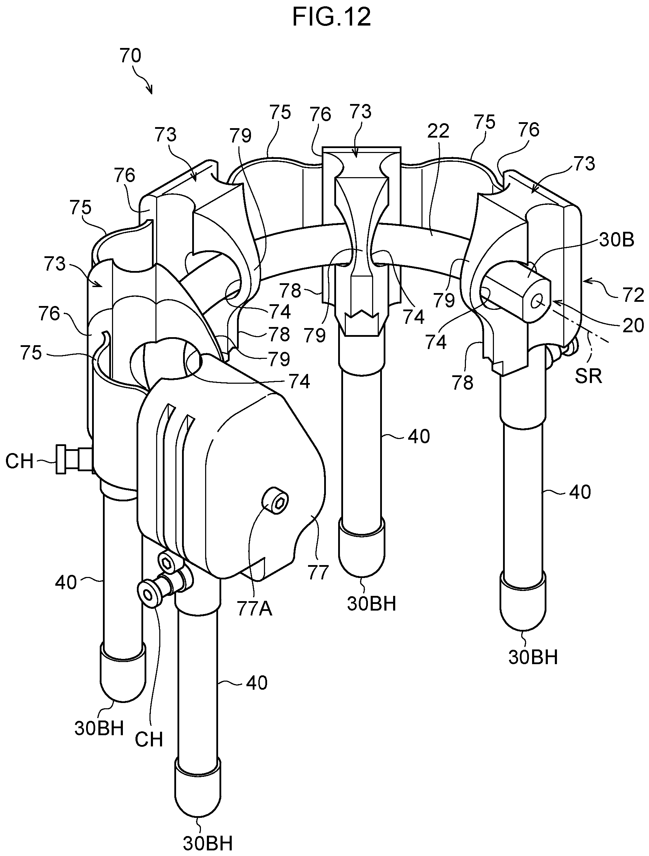

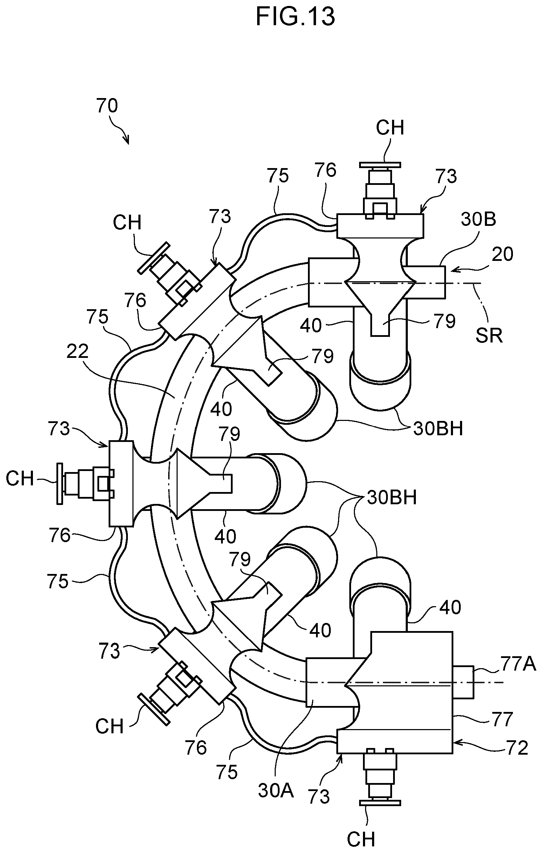

Due to the curved deformation, a force is applied to the thin portions 79 of the frame member 72, and the leaf-spring expansion/contraction members 75 are expanded due to elastic deformation so that the support joint members 73 are moved to positions to conform to the curving. In this manner, the frame member 72 is curved and deformed conforming to the curved deformation of the base actuator 20 (see Figs. 12 and 13).

Due to the curved deformation of the frame member 72, relative positions of proximal end portions of the five finger actuators 40 are changed from a state of being aligned on a straight line to a state of being aligned on a curved line. In this state, compressed air is supplied to the finger actuators 40 via the air supply hose. Consequently, the gripping actuator 40 is curved and deformed depending on the internal pressure such that the curve inner side RI becomes the inner side thereof.

The pressure of the compressed air supplied via the air supply hose is adjusted, and the grip target object is pinched between distal end portions of the plurality of finger actuators 40, and the grip target object can be gripped with a force generated due to the curving.

In the robot hand 70 of the embodiment, the relative positions of the one ends of the plurality of finger actuators 40 can be easily moved using the base actuator 20. Consequently, grip performance can be improved according to a position, a shape, and the like of the grip target object.

The entire disclosure of Japanese Patent Application No. 2022-144196 filed on September 9, 2022 is incorporated herein by reference.

All of the literature, patent applications, and technical standards described in this specification are incorporated herein by reference to the same extent that individual literature, patent applications, and technical standards were specifically and individually described to be incorporated by reference.

## Claims

1. A robot hand comprising:
a cylindrical base actuator that is contracted in a cylinder-axial direction and is curved on one side of a cylinder wall depending on an increase in internal pressure in a cylinder;
a frame member that is disposed along the base actuator in the cylinder-axial direction, that supports the base actuator, that has an expansion/contraction portion which is expanded and contracted conforming to curved deformation of the base actuator, and that is curved and deformed conforming to the curved deformation of the base actuator; and
a plurality of cylindrical finger actuators that are attached to the frame member at intervals in an extension direction of the base actuator to have one end fixed to the frame member and another end being a free end so that the finger actuators extend in a direction intersecting the cylinder-axial direction, and that are each contracted and curved in the cylinder-axial direction on one side of a cylinder circumference depending on the increase in internal pressure in the cylinder.

2. The robot hand according to claim 1, wherein:
the frame member includes support joint members provided at respective attachment positions of the plurality of finger actuators, and
the expansion/contraction portion connects adjacent support joint members to each other.

3. The robot hand according to claim 2, wherein the expansion/contraction portion is formed of a leaf spring that is curved conforming to the curved deformation of the base actuator.

4. The robot hand according to claim 1, wherein the base actuator has one end fixed to the frame member and another end being a free end.

5. The robot hand according to any one of claims 1 to 4, wherein the frame member is integrally molded.
